(19) Europäisches Patentamt
European Patent Office
Office européen des brevets

(11) Veröffentlichungsnummer: **0 306 658 B1**

(12) # EUROPÄISCHE PATENTSCHRIFT

(45) Veröffentlichungstag der Patentschrift: **02.09.92**

(51) Int. Cl.[5]: **C03B 5/235**, F23C 9/00, F27B 3/22

(21) Anmeldenummer: **88111100.9**

(22) Anmeldetag: **12.07.88**

(54) **Ofen.**

(30) Priorität: **08.09.87 DE 3730037**

(43) Veröffentlichungstag der Anmeldung: **15.03.89 Patentblatt 89/11**

(45) Bekanntmachung des Hinweises auf die Patenterteilung: **02.09.92 Patentblatt 92/36**

(84) Benannte Vertragsstaaten: **FR GB IT**

(56) Entgegenhaltungen:
**EP-A- 0 115 247**
**US-A- 2 800 175**
**US-A- 3 193 268**

**GLASTECHNISCHE BERICHTE Band 59, nr. 12, 1986 Frankfurt, S. 333-343; U. Kircher : "Fortschritte bei Abgasreinigung von Glasschmelzöfen"**

**GWF GAS/ERDGAS Band 127, Heft 9, September 1986, Oldenbourg, München, S. 386-388; W. Berge et al.:"NOx-Miderung durch Abgasrückführung"**

(73) Patentinhaber: **KÖRTING HANNOVER AG**
**Badenstedter Strasse 56**
**W-3000 Hannover 91(DE)**

(72) Erfinder: **Wiedmann, Uwe, Dr.-Ing.**
**Salzweg 53**
**W-3003 Ronnenberg 1(DE)**
Erfinder: **Sieger, Werner**
**Gevekerkamp 45**
**W-3000 Hannover 91(DE)**

(74) Vertreter: **Leine, Sigurd, Dipl.-Ing. et al**
**Dipl.-Ing. Sigurd Leine Dipl.-Phys. Dr. Norbert König Patentanwälte Burckhardtstrasse 1**
**W-3000 Hannover 1(DE)**

EP 0 306 658 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Ofen der im Oberbegriff des Anspruchs 1 genannten Art.

Durch den Aufsatz "Erfahrungen mit Erdgasbrennern an Glasschmelzöfen" von Werner Sieger in der so betitelten Firmendruckschrift der Firma Körting Hannover AG, veröffentlicht am 7. April 1986 in der Sitzung des Fachausschusses Nr.2 "Ofenbau und Wärmewirtschaft der deutschen glastechnischen Gesellschaft", ist ein Ofen der betreffenden Art bekannt, bei dem die Düse zur Zuführung von Brenngas durch eine Strahlpumpe gebildet ist, deren Druckseite mit einer Druckgasquelle und deren Saugseite mit der Umgebungsluft verbunden ist. Brenngas und Luft vermischen sich innig und treten aus der Mündungsdüse der Strahlpumpe in den Heißluftstrom des Ofens ein. Durch die Beimischung von Luft zu dem Brenngas vor Eintritt in den Ofen läßt sich die Form und die Länge der Flamme beeinflussen, so daß diese ihre Wärme relativ schnell über eine große Fläche an das Glasbad abgibt, ohne daß lange, bis in den Abzugbereich schlagende Gasflammen entstehen, was einen hohen Energieverlust zur Folge haben würde. Die Beimischung von Luft zum Brenngas führt zu hohen Temperaturspitzen im mischungsintensiven, mündungsnahen Bereich der Düse des Brenners, was wiederum den Nachteil einer Erhöhung der Bildung von $NO_X$ zur Folge hat.

Zur Verminderung von Stickoxiden ($NO_X$) ist die Rückführung ausgebrannter Rauchgase in die Verbrennungsluft bekannt ("Maßnahmen zur Reduzierung der $NO_X$-Emission von Gasbrennern" in der Zeitschrift "GWF - Gas/Erdgas" 126, 1985, Heft 2, Seite 73 - 86, Verfasser Lajos Joof, Otto Menzel). Hierdurch erfolgt eine allgemeine Absenkung der Verbrennungstemperatur und eine allgemeine Absenkung der Verbrennungstemperatur und eine Verringerung des $O_2$-Partialdrukkes. Für eine deutliche $NO_X$-Minderung sind hierbei Rauchgasmengen von über 10 % bis zu etwa 20 % erforderlich. Die durch die Zumischung von Luft zum Brenngas in der Düse bewirkte Bildung von Stickoxiden wird hierdurch nicht vermieden.

Durch US-A-3 193 268 ist ein Ofen bekannt, der eine Öffnung zur Zuführung von Brenngas sowie Mittel zur Beimischung eines geringen Anteils von Abgas zu dem Brenngas vor Austritt aus der Öffnung aufweist. Die Zuführung für Brenngas besteht aus Kanälen großen Querschnitts, aus denen das Brenngas mit niedriger Strömungsgeschwindigkeit in den Ofen eintritt. Ein geringer Anteil von Rauchgas wird dem Brenngas kurz vor Eintritt in die Kanäle beigemischt.

Diese Form der Beimischung hat zunächst den Nachteil, daß aufgrund der geringen Strömungsgeschwindigkeiten die Vermischung des Rauchgases mit dem Brenngas schlecht ist, so daß sich daraus ein unregelmäßiges Flammbild ergibt. Außerdem bestehen die Mittel zur Vermischung von Brenngas mit Rauchgas aus einer T-förmigen Zuführung der Rauchgasleitung zu der Brenngasleitung. Dadurch ergeben sich schlechte Mischungsverhältnisse. Darüberhinaus besteht ein weiterer wesentlicher Nachteil darin, daß die Strömung des Brenngases selbst keinen Einfluß auf die Menge des zugeführten Rauchgasanteils hat. Die Einstellung der Gasmengen erfolgt vielmehr zwangsweise durch von Hand eingestellte Ventile.

Der Erfindung liegt die Aufgabe zugrunde, einen Ofen der betreffenden Art anzugeben, bei dem die Stickoxidanteile im Abgas verringert sind, die durch die Zumischung von Gas zum Brenngas zum Zwecke der Beeinflussung der Flammform und Flammlänge bedingt sind.

Die der Erfindung zugrundeliegende Aufgabe wird durch die im Kennzeichen des Anspruchs 1 angegebene Lehre gelöst.

Durch die Zumischung von Rauchgas anstelle der bisher verwendeten Luft verringern sich die Spitzen der Verbrennungstemperatur im mündungsnahen Bereich der Düse, und gleichzeitig verringert sich der $O_2$-Partialdruck, so daß eine deutliche Verringerung der Stickoxide eintritt.

Der dem Brenngas beigemischte Rauchgasanteil führt nur zu einer unwesentlichen Verringerung der Verbrennungstemperatur im Feuerraum, so daß insgesamt die Ofenleistung und beispielsweise im Falle eines Glasschmelzofens die Schmelzleistung erhalten bleibt. Die Erfindung ist besonders zweckmäßig anwendbar bei einem Glasschmelzofen deshalb, weil dort die Einstellung von Flammform und Flammlänge zum Zwecke intensiver Wärmeabgabe von besonderer Bedeutung ist.

Gemäß einer Weiterbildung der Erfindung hat das dem Brenngas beigemischte Abgas eine Temperatur, die wesentlich niedriger ist als die Temperatur des Abgases beim Austritt aus dem Ofen. Das bedeutet, daß ggf. ein Kühler zwischengeschaltet ist.

Das Rauchgas läßt sich wie bei dem bekannten Ofen durch eine Strahlpumpe selbsttätig ansaugen, so daß keine zusätzlichen Förderorgane erforderlich sind. Die dem Brenngas beigemischte Menge von Rauchgas liegt vorzugsweise im Bereich von 1 - 3 %, bezogen auf die gesamte Verbrennungsluftmenge.

Anhand der Zeichnung soll die Erfindung näher erläutert werden.

Fig. 1 zeigt schematisch einen Vertikalschnitt durch ein Ausführungsbeispiel des erfindungsgemäßen Ofens zum Schmelzen von Glas,

Fig. 2 ist ein Horizontalschnitt II-II durch Fig.1 und

Fig. 3 zeigt vergrößert im Schnitt die in Fig. 1 gezeigte Düse zum Mischen von Brenn- und Abgas.

Die Fig. 1 und 2 zeigen einen Ofen 1, dessen unterer Teil eine Glasschmelzwanne 2 bildet, in der sich ein Rohgemenge 3 aus Glas befindet, das durch einen Abflußkanal 4 abfließen kann. Auf dem Rohgemenge befindet sich Glasgemenge 5, über das dicht eine langgestreckte Flamme hinwegstreicht, die durch Pfeile 6 in Fig. 2 angedeutet ist.

Zur Flammbildung befindet sich in einer Wand 7 des Ofens 1 eine Öffnung, in die dicht eine Düse 8 einer Strahlpumpe 9 eingesetzt ist, die über eine Gasdruckleitung 10 Brenngas erhält und über eine Saugleitung 11 Abgas aus einer Kammer 13, die durch einen Kanal 14 mit dem oberen Bereich des Ofens 1 verbunden ist.

Das Abgas aus dem Ofen 1 gelangt über den Kanal 14 in den oberen Bereich der Kammer 13 und strömt dort nach unten durch ein Gitterwerk 15 und gelangt über eine Abgasleitung 16, einen Schieber 17 und einen Zug 18 in einen Kamin 19. In der dargestellten Lage ist der Schieber 17, angedeutet durch eine gestrichelte Linie, geöffnet.

Seitlich neben dem Kanal 14 befindet sich ein weiterer Kanal 20 zur Verbindung des oberen Teils des Ofens 1 mit einer weiteren Kammer 21, die in gleicher Weise wie die Kammer 13 im unteren Bereich durch eine Abgasleitung 22 und einen Schieber 23 mit dem Zug 18 und dem Kamin 19 verbunden ist. In der gezeigten Lage ist der Schieber 23, angedeutet durch eine ausgezogene Linie, geschlossen. Durch eine nicht im einzelnen dargestellte Einrichtung 24 sind die Abgasleitungen 16 bzw. 22 mit der Atmosphäre verbindbar, wenn der jeweils zugehörige Schieber 23 bzw. 17 geschlossen ist. In der Darstellung der Fig. 1 und 2 ist der Schieber 23 geschlossen, so daß die Abgasleitung 16 mit der Atmosphäre verbunden ist und so Luft unten in die Kammer 21 eintritt, sich dort durch das heiße Gitterwerk 15 erwärmt und schließlich durch den Kanal 20 in den oberen Teil des Ofens 1 eintritt und die wesentliche Verbrennungsluft für das aus der Düse 8 eintretende Brenngas bildet. Ist in der dargestellten Arbeitslage das Gitterwerk 15 in der Kammer 13 erhitzt, so wird die Arbeitsweise umgekehrt. Das bedeutet, daß jetzt der Schieber 23 geöffnet, die Verbindung der Abgasleitung 22 mit der Atmosphäre durch die Einrichtung 24 unterbrochen und eine Verbindung zwischen der Atmosphäre und der Abgasleitung 16 hergestellt sowie der Schieber 17 geschlossen wird. Gleichzeitig wird die Düse 8 abgeschaltet, während eine weitere, in der Zeichnung nicht dargestellte Düse in dem Kanal 14 in Betrieb gesetzt wird, so daß der Kanal 14 als Luftleitung zur Zuleitung von Brennluft dient, die zuvor in dem Gitterwerk 15 erwärmt worden ist. Die Flamme verläuft dann in umgekehrter Richtung zur Richtung der Pfeile 6 in Fig. 2

Fig. 3 zeigt die Strahlpumpe 9 gemäß Fig. 1 vergrößert und im Schnitt. Die Gasdruckleitung 10 führt zu einer Treibdüse 25, aus der das Brenngas mit hoher Geschwindigkeit in einen Mischkörper 26 gelangt, so daß ein Unterdruck an einer Saugöffnung 27 entsteht, an der die Saugleitung 11 angeschlossen ist, die zu der Kammer 13 führt, die bei der Betriebslage gemäßg Fig. 1 und 2 Abgas führt, so daß Abgas über die Saugleitung 11 und die Saugöffnung 27 in das Innere des Mischkörpers 26 eintritt und sich in einem nachfolgenden Diffusionsstück 28 innig mit dem Brenngas vermischt, ehe es aus der Düse 8 austritt und in den Ofen 1 gelangt.

Bei dem dargestellten Ausführungsbeispiel beträgt der Anteil des in dem Mischkörper 26 bzw. dem Diffusionsstück 28 innig mit dem Brenngas vermischten Abgases ca. 1 - 3 %. Durch die Saugleitung 11 oder einen evtl. zusätzlich vorgesehenen, in der Zeichnung nicht dargestellten Kühler wird die Temperatur des zugemischten Abgases beträchtlich verringert. Die über den Kanal 20 zugeführte Verbrennungsluft hat typischerweise eine Temperatur von ca. 1200 ° C, und die Temperatur in dem Ofen 1 beträgt typischerweise 1450 - 1500 ° C.

**Patentansprüche**

1. Ofen, mit einer Öffnung zur Zuführung von Brenngas, mit Mitteln zur Beimischung eines Anteils von Abgas zu dem Brenngas vor Austritt aus der Öffnung und mit einem von der Öffnung getrennten, auf den Austrittsbereich der Öffnung gerichteten Kanal zur Zuführung von Luft, **dadurch gekennzeichnet,** daß die Öffnung eine Düse (8) mit einem engen Querschnitt einer Strahlpumpe (9) ist, deren Mischkörper (26) mit einer Saugleitung (11) für Abgas verbunden ist, und daß die Strömungsgeschwindigkeit des Brenngases bei Austritt aus der Düse (8) wesentlich größer als die Strömungsgeschwindigkeit der Luft ist.

2. Ofen nach Anspruch 1, **dadurch gekennzeichnet,** daß der Ofen (1) ein Glasschmelzofen ist.

3. Ofen nach Anspruch 2, **dadurch gekennzeichnet,** daß das dem Brenngas beigemischte Abgas eine Temperatur hat, die wesentlich niedriger ist als die Temperatur des Abgases beim Austritt aus dem Ofen.

4. Ofen nach Anspruch 1, **dadurch gekennzeichnet,** daß die Menge des dem Brenngas beigemischten Abgases ca. 1 - 3 % bezogen auf die gesamte Verbrennungsluftmenge beträgt.

## Claims

**1.** A furnace, having an aperture for the supply of burnable gas, having means for adding an amount of waste gas to the burnable gas before leaving the aperture and having a duct separated from the aperture and directed towards the outlet region of the aperture,
**characterised in that** the aperture is a nozzle (8) having a narrow cross section of a jet pump (9), the mixing chamber (26) of which is connected to a suction line (11) for waste gas,
**and in that** the flow velocity of the burnable gas when leaving the nozzle (8) is substantially greater than the flow velocity of the air.

**2.** A furnace according to Claim 1,
**characterised in that** the furnace (1) is a glass melting furnace.

**3.** A furnace according to claim 2,
**characterised in that** the waste gas added to the burnable gas has a temperature which is substantially lower than the temperature of the waste gas when leaving the furnace.

**4.** A furnace according to Claim 1,
**characterised in that** the quantity of waste gas added to the burnable gas is approximately 1 - 3 % related to the entire amount of combustion air.

## Revendications

**1.** Four avec une ouverture pour l'amenée de gaz combustible, avec des moyens pour mélanger une partie de gaz d'échappement au gaz combustible avant la sortie de l'ouverture et avec un canal séparé de l'ouverture et dirigé vers l'ouverture dans la région de sortie de l'ouverture pour l'amenée d'air,
caractérisé en ce que l'ouverture est une buse (8) à section transversale étroite d'une pompe à jet (9) dont le corps de mélange (26) est relié à une conduite d'aspiration (11) pour le gaz d'échappement, et que la vitesse d'écoulement du gaz d'échappement à la sortie de la buse (8) est sensiblement plus élevée que la vitesse d'écoulement de l'air.

**2.** Four selon la revendication 1,
caractérisé en ce que le four (1) est une arche à fritter.

**3.** Four selon la revendication 2,
caractérisé en ce que le gaz d'échappement mélangé au gaz combustible a une température qui est sensiblement plus basse que la température du gaz d'échappement à la sortie du four.

**4.** Four selon la revendication 1,
caractérisé en ce que la quantité de gaz d'échappement mélangé au gaz combustible est d'environ 1-3 % rapportée à la quantité totale d'air de combustion.

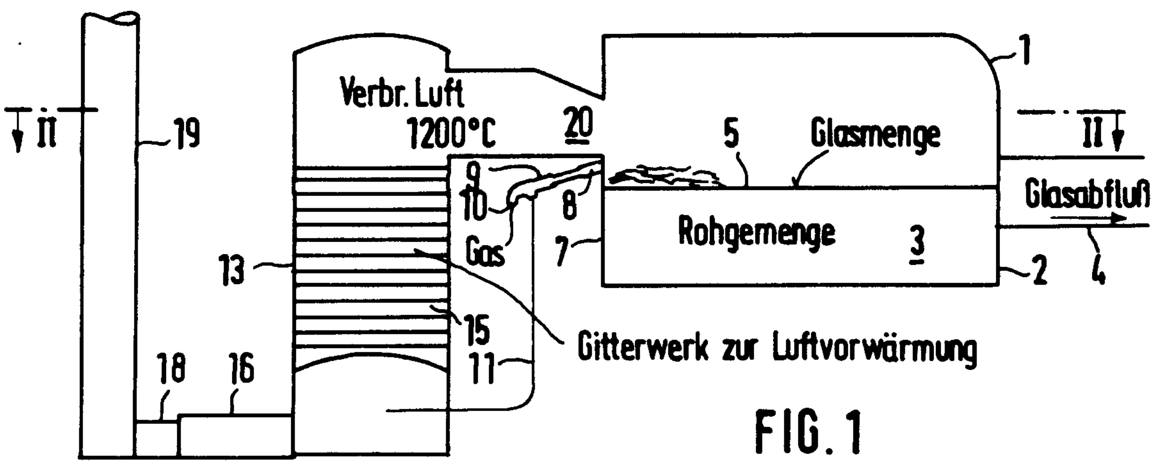


FIG. 1

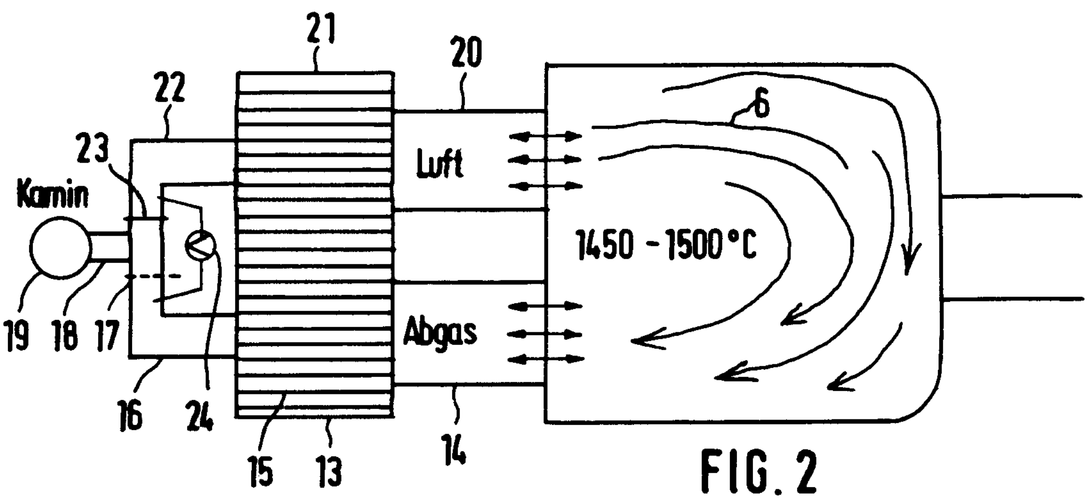


FIG. 2

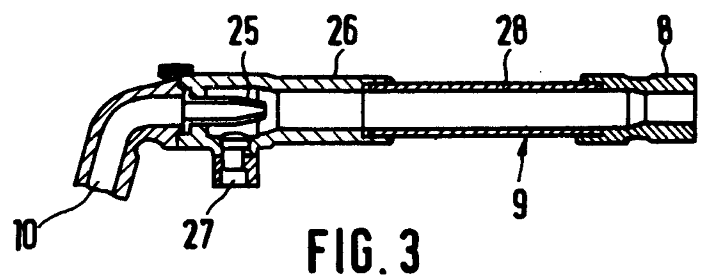


FIG. 3